# EUROPEAN PATENT APPLICATION

(11) **EP 3 933 388 A1**
(43) Date of publication of application: **05.01.2022**
(21) Application number: 20795193.0
(22) Date of filing: 24.04.2020
(51) Int. Cl.: G01N 23/04, A22C 17/00, A22C 21/00, G06T 7/00

(54) **FEATURE POINT RECOGNITION SYSTEM AND RECOGNITION METHOD**

(30) Priority: 26.04.2019 JP 2019086815
(71) Applicant: MAYEKAWA MFG. CO., LTD., Tokyo 135-8482 (JP)
(72) Inventor: TOKUYAMA, Koutarou, Tokyo 135-8482 (JP); MURANAMI, Hiroaki, Tokyo 135-8482 (JP); YAMASHITA, Tomoki, Tokyo 135-8482 (JP); TOKUMOTO, Masaru, Tokyo 135-8482 (JP); UMINO, Tatsuya, Tokyo 135-8482 (JP)
(74) Representative: Stöckeler, Ferdinand
(86) International application number: PCT/JP2020/017697
(87) International publication number: WO 2020/218513

(57) **Abstract**

According to this feature point recognition system (1), data of a feature point of a first group obtained by a first algorithm calculation unit (12) with no mask processing is compared with data of a feature point of a second group detected by a third algorithm calculation unit (16) obtained through mask processing performed by a second algorithm calculation unit (14), whether the data is abnormal is determined, and thereby feature points of a subject P can be recognized more accurately and stably than in the related art.

## Description

### TECHNICAL FIELD

The present invention relates to a feature point recognition system and recognition method using deep learning that can be used, for example, when a bone in meat is identified, and the like.

Priority is claimed based on Japanese Patent Application No. 2019-86815 filed on April 26, 2019, the content of which is incorporated herein by reference.

### BACKGROUND ART

When meat is photographed as a subject and a feature point of a bone inside the meat is detected to automatically debone the meat using a meat processing robot, or the like, for example, accurate position information of the feature point in the subject needs to be obtained.

Patent Literature 1 discloses a system in which a subject is irradiated with X-rays from an X-ray radiation device, an X-ray transmission image obtained from X-rays transmitted by the subject is processed, and coordinates of the position of a feature point such as a bone are obtained.

### [Citation List]

### [Patent Literature]

[Patent Literature 1] PCT International Publication No. 2012/056793 (Japanese Patent No. 5384740)

### SUMMARY OF INVENTION

### Technical Problem

In the system disclosed in Patent Literature 1, a region in an image in which a feature point is expected to be present is first specified with fixed coordinates, a boundary part desired to be captured is extracted using an image processing method such as binarization or edge extraction through threshold processing on the image in the region, and a feature point is obtained from the shape of the boundary part.

However, in a case of subjects with individual differences in shape, size, flesh, and the like, for example, such as meat and human bodies, the shape part that is necessary for detecting a feature point may be excluded from the range of fixed coordinates, a luminance value for threshold processing may not be considered, or an unnecessary shape may be detected due to an irregular internal structure, which makes it difficult to narrow down necessary feature points.

In addition, disturbance caused by noise of the image or a change in illumination light may occur, surface states of a subject may not be uniform, which affects the image, or changes in the posture and shape of the subject at the time of photographing may variously affect the image, and thus it is difficult to accurately recognize a feature point through image processing compared to a case in which an artificial object having a constant shape or size is a subject. If there is an error in a position at which a feature point has been recognized in a case where the technique is applied to a meat processing system, or the like, a problem such as a knife getting stuck in a bone or meat being wasted may arise.

As described above, obtaining position information of a feature point from an image of a subject stably and accurately needs to be improved in the technique of the related art.

### Solution to Problem

[1] An aspect of the present invention is a feature point recognition system that recognizes a feature point of a subject in an image acquired from the subject, the feature point recognition system including:
   an image acquisition unit configured to acquire an image of the subject,
   a first algorithm calculation unit configured to perform calculation processing on the image acquired by the image acquisition unit according to inference calculation in which feature points of the subject have been deep-learned and to detect a feature point of a first group,
   a second algorithm calculation unit configured to perform calculation processing on the image acquired by the image acquisition unit according to inference calculation in which feature areas of the subject have been deep-learned and to detect a feature area,
   a third algorithm calculation unit configured to detect a feature point of a second group using the feature area obtained by the second algorithm calculation unit, and
   a calculation unit configured to output a feature point of the subject using at least one of data of the feature point of the first group detected by the first algorithm calculation unit and data of the feature point of the second group detected by the third algorithm calculation unit.

   According to the feature point recognition system, at least one of the data of a feature point of the first group detected by the first algorithm calculation unit and the data of the feature point of the second group detected by the third algorithm calculation unit using the feature area after the second algorithm calculation unit detects the feature area is selectively used to output a feature point of the subject, and thereby position information of the feature point can be obtained from the image of the subject stably and accurately.
[2] The feature point recognition system described in [1] above further includes a second image acquisition unit configured to acquire a second image of the subject, and a second image calculation unit configured to detect a feature point of a third group from the second image acquired by the second image acquisition unit, in which the calculation unit may investigate normality or abnormality of a detection result of the feature point of the subject using at least two among the data of the feature point of the first group detected by the first algorithm calculation unit, the data of the feature point of the second group detected by the third algorithm calculation unit, and the data of the feature point of the third group detected by the second image calculation unit.
   In this case, when the calculation unit investigates normality or abnormality of a detection result of the feature point of the subject using at least two among the data of the feature point of the first group detected by the first algorithm calculation unit, the data of the feature point of the second group detected by the third algorithm calculation unit, and the data of the feature point of the third group detected by the second image calculation unit, position information of the feature point can be obtained from an image of the subject more stably and with higher accuracy.
[3] The feature point recognition system described in [1] or [2] above may include a fourth algorithm calculation unit configured to calculate the data of the feature area obtained by the second algorithm calculation unit according to inference calculation in which normal feature areas have been deep-learned and to determine normality of the feature area obtained by the second algorithm calculation unit.
   In this case, when the fourth algorithm calculation unit performs calculation on the data of the feature area obtained by the second algorithm calculation unit according to inference calculation in which normal feature areas have been deep-learned and determines the normality of the feature areas obtained by the second algorithm calculation unit, position information of the feature point can be obtained from an image of the subject more stably and with higher accuracy.
[4] In the feature point recognition system described in [1] to [3] above, the calculation unit may compare at least two among the data of the feature point of the first group detected by the first algorithm calculation unit, the data of the feature point of the second group detected by the third algorithm calculation unit, and the data of the feature point of the third group detected by the second image calculation unit with each other, select a feature point of the two feature points used for the comparison that is determined to have higher accuracy as a feature point of the subject, and output the feature point. In this case, position information of the feature point can be obtained from an image of the subject using the comparison more stably and with higher accuracy.
   The image acquisition unit may acquire at least one among X-ray images, 3D images, CT scan images, gamma-ray images, UV-ray images, visible light images, infrared-ray images, RGB images, and ultrasonic flaw detection images.
[5] Another aspect of the present invention is a feature point recognition method for recognizing a feature point of a subject in an image acquired from the subject, the feature point recognition method including:
   an image acquisition step of acquiring an image of the subject,
   a first algorithm calculation step of performing calculation processing on the image acquired in the image acquisition step according to inference calculation in which feature points of the subject have been deep-learned and detecting a feature point of a first group,
   a second algorithm calculation step of performing calculation processing on the image acquired by the image acquisition step according to inference calculation in which feature areas of the subject have been deep-learned and detecting a feature area,
   a third algorithm calculation step of detecting a feature point of a second group using the feature area obtained by the second algorithm calculation step, and
   a calculation step of outputting a feature point of the subject using at least one of data of the feature point of the first group detected in the first algorithm calculation step and data of the feature point of the second group detected in the third algorithm calculation step.

According to the feature point recognition method, at least one of the data of the feature point of the first group detected in the first algorithm calculation step and the data of the feature point of the second group detected in the third algorithm calculation step using the feature area after the feature area is detected in the second algorithm calculation step is selectively used to output a feature point of the subject, and thereby position information of the feature point can be obtained from an image of the subject stably and with higher accuracy.

In the method of [5] described above, a step similar to each step of the operation of the system described in [2] to [4] above may be provided. In this case, effects similar to those of the system described in [2] to [4] above can be obtained.

### ADVANTAGEOUS EFFECTS OF INVENTION

According to the feature point recognition system and recognition method of the present invention, at least one of the data of the feature point of the first group detected directly from an image of the subject acquired by the image acquisition unit and the data of the feature point of the second group detected using data of a feature area after the feature area is detected from the image is selectively used, and thereby position information of the feature point can be obtained from an image of the subject stably and with higher accuracy.

### BRIEF DESCRIPTION OF DRAWINGS

Fig. 1 is a side view illustrating a feature point recognition system according to an embodiment of the present invention.
Fig. 2 is a block diagram illustrating an image processing device according to the embodiment.
Fig. 3 is a flowchart showing an operation of the embodiment.
Fig. 4 is a diagram for describing an operation of a first algorithm calculation unit according to the embodiment.
Fig. 5 is a diagram for describing an operation of the first algorithm calculation unit according to the embodiment.
Fig. 6 is a diagram for describing training data of the first algorithm calculation unit according to the embodiment.
Fig. 7 is a diagram for describing an operation of a second algorithm calculation unit according to the embodiment.
Fig. 8 is a diagram for describing an operation of the second algorithm calculation unit according to the embodiment.
Fig. 9 is a diagram for describing an operation of a third algorithm calculation unit according to the embodiment.
Fig. 10 is a diagram for describing an operation of the third algorithm calculation unit according to the embodiment.
Fig. 11 is a diagram for describing an operation of the third algorithm calculation unit according to the embodiment.
Fig. 12 is a diagram for describing an operation of the third algorithm calculation unit according to the embodiment.
Fig. 13 is a diagram for describing an operation of the second algorithm calculation unit and the third algorithm calculation unit on 3D data according to the embodiment.
Fig. 14 is a diagram for describing an operation of a calculation unit according to the embodiment.

### DESCRIPTION OF EMBODIMENTS

Although the present invention will be described in detail exemplifying embodiments, the technical scope of the present invention is not limited by the configurations of these embodiments and should be interpreted most broadly based on the description of the claims. Some configurations may be omitted from the following embodiments, and other known configurations may be added.

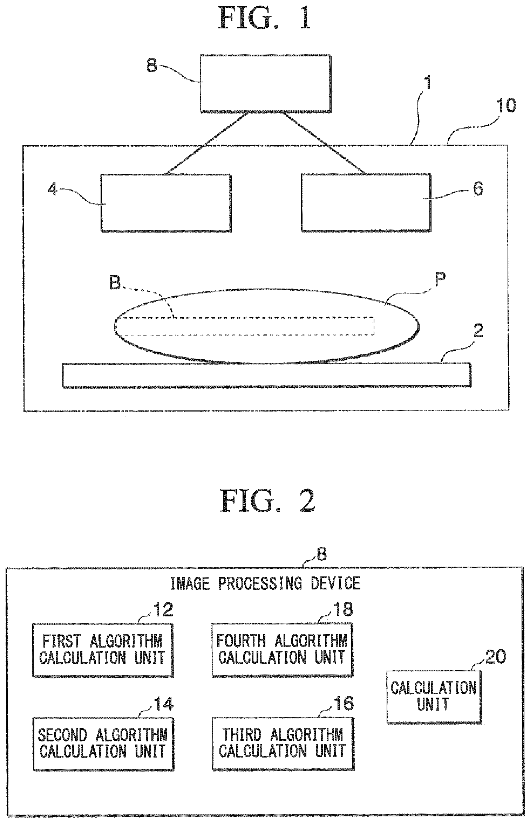

Fig. 1 is a front view illustrating a feature point recognition system according to an embodiment of the present invention. This feature point recognition system 1 is for processing meat as a subject P and includes a conveyor 2 that carries the subject P, an X-ray image acquisition unit 4 that acquires an X-ray image obtained from X-rays transmitted through the subject P placed on the conveyor 2, an X-ray generation device (not illustrated) that generates X-rays for the X-ray image acquisition unit 4, a 3D image acquisition unit 6 (a second image acquisition unit) that acquires a 3D image of a surface of the subject P, an image processing device 8 that processes signals output from the X-ray image acquisition unit 4 and the 3D image acquisition unit 6, and a shield 10 that shields X-rays from the X-ray generation device. An imaging timing of the X-ray image acquisition unit 4 may or may not be the same as an imaging timing of the 3D image acquisition unit 6. In addition, positions at which the subject P is photographed by the X-ray image acquisition unit 4 and the 3D image acquisition unit 6 may be the same as or different from each other.

In the feature point recognition system 1 according to this embodiment, the subject P is a part of a carcass of livestock such as a pig, a cow, a sheep, or a chicken, and position information of a plurality of feature points along the outer circumference of a bone B inside the subject P is acquired. In post-processing which is not illustrated, coordinates of feature points recognized by the feature point recognition system 1 are used to cut the boundary between the bone B and the meat by moving a knife handled by, for example, a robot arm, and thus a process of removing the bone B from the meat of the subject P can be performed.

However, the present invention is not limited to being applied to meat and may be used to obtain any singularity of a structure of a living body or various kinds of organisms such as a human, a plant, or an artificial object as the subject P, a purpose of using a feature point is not limited, and a feature point may be used for any purpose other than deboning work. The conveyor 2 that transports the subject P is not necessarily used, the subject P may be fixed at the time of photographing with any means, or an image may be acquired while moving the subject P.

In addition, although the X-ray image acquisition unit 4 and the 3D image acquisition unit 6 are used as an image acquisition unit and a second image acquisition unit in this embodiment, image acquisition units of the present invention are not limited to these, an image acquisition unit that acquires CT scan images, gamma-ray images, ultrasonic flaw detection images, UV-ray images, visible light images, infrared-ray images, RGB images, and the like may be used, and a feature point can be recognized by using two images obtained by capturing the same type of image in different directions of the subject P instead of using two types of images, or using only one image. In other words, a configuration not using the second image acquisition unit is also possible.

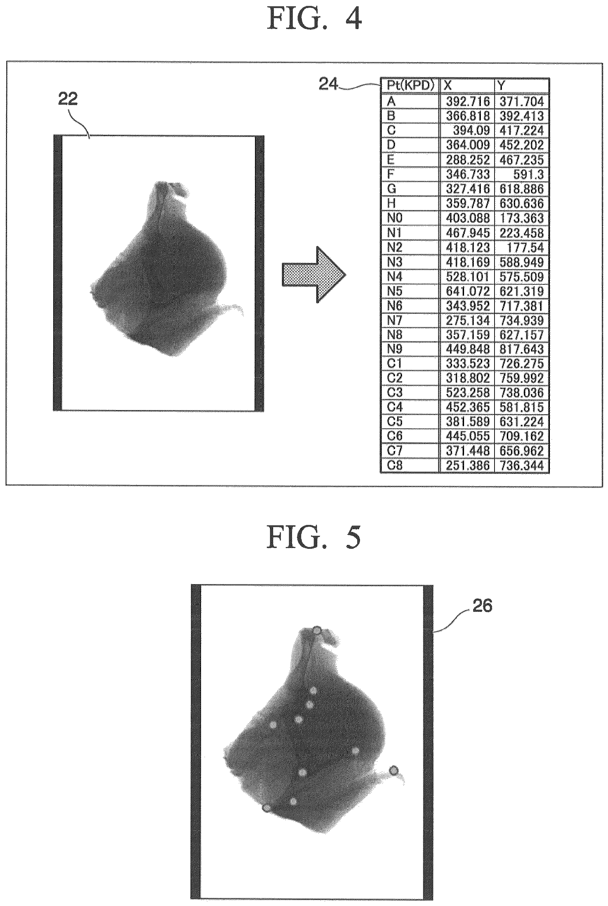

The X-ray image acquisition unit 4 detects X-rays that have radiated from an X-ray tube of the X-ray generation device and been transmitted through the subject P using an X ray detector and acquires a two-dimensional X-ray image of the subject P. Data of the X-ray image acquired by the X-ray image acquisition unit 4 is stored in a storage medium provided inside or outside of the X-ray image acquisition unit 4 and delivered to the image processing device 8 to be processed. The image 22 in Fig. 4 is an example of the X-ray image acquired by the X-ray image acquisition unit 4.

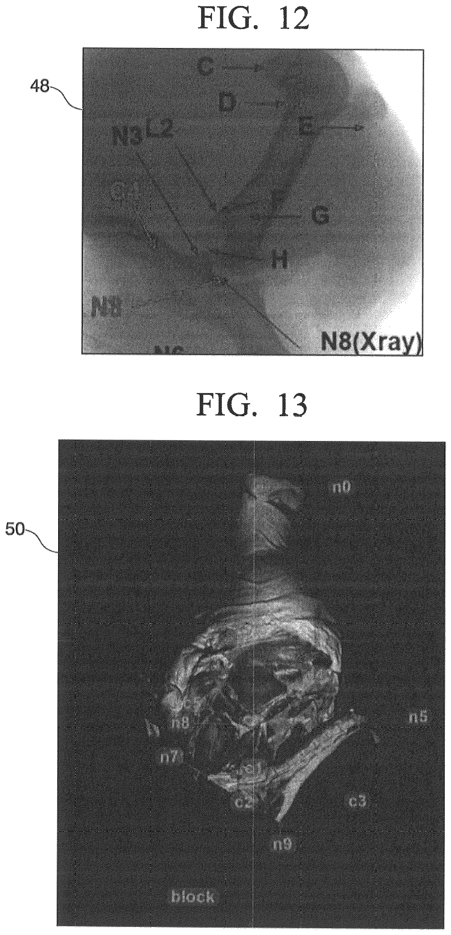

The 3D image acquisition unit 6 is for ascertaining the three-dimensional shape of the subject P placed on the conveyor 2. Although a type of the 3D image acquisition unit 6 is not limited, for example, line-shaped rays are radiated to scan a surface of the subject P, a camera measures an amount of light reflected from the surface of the subject P, and thereby a 3D image reflecting the three-dimensional shape of the subject P may be acquired. Data of the 3D image acquired by the 3D image acquisition unit 6 is stored in a storage medium provided inside or outside of the 3D image acquisition unit 6 and delivered to the image processing device 8 to be processed. Fig. 13 is an example of the 3D image acquired by the 3D image acquisition unit 6.

Fig. 2 is a block diagram illustrating a configuration of the image processing device 8. The image processing device 8 is mainly composed of a first algorithm calculation unit 12, a second algorithm calculation unit 14, a third algorithm calculation unit 16, a fourth algorithm calculation unit 18, and a calculation unit 20.

The image processing device 8 is realized by hardware such as a computer including a circuit unit (circuitry) executing a software program. The hardware is, for example, a central processing unit (CPU), large-scale integration (LSI), an application specific integrated circuit (ASIC), a field-programmable gate array (FPGA), a graphics processing unit (GPU), or the like. The above-mentioned program is stored in a storage device having a storage medium. The storage medium is, for example, a hard disk drive (HDD), a flash memory, a read only memory (ROM), a digital versatile disc (DVD), or the like. Furthermore, the above-mentioned program may be a difference program realizing some functions of the image processing device 8.

The first algorithm calculation unit 12 performs calculation processing according to inference calculation in which feature points to be detected in the subject P have been deep-learned based on X-ray image data from the X-ray image acquisition unit 4 to detect feature points of a first group. In this embodiment, these feature points correspond to positions for obtaining a movement trajectory of a knife in post-processing.

Fig. 4 schematically illustrates calculation processing by the first algorithm calculation unit 12, in which two-dimensional pixel data of the X-ray image 22 acquired by the X-ray image acquisition unit 4 is input to perform calculation processing according to inference calculation in which feature points to be obtained have been deep-learned in advance and normalized (X, Y) coordinates 24 of each of feature points A, B, C, ..., C6, C7, and C8 are output.

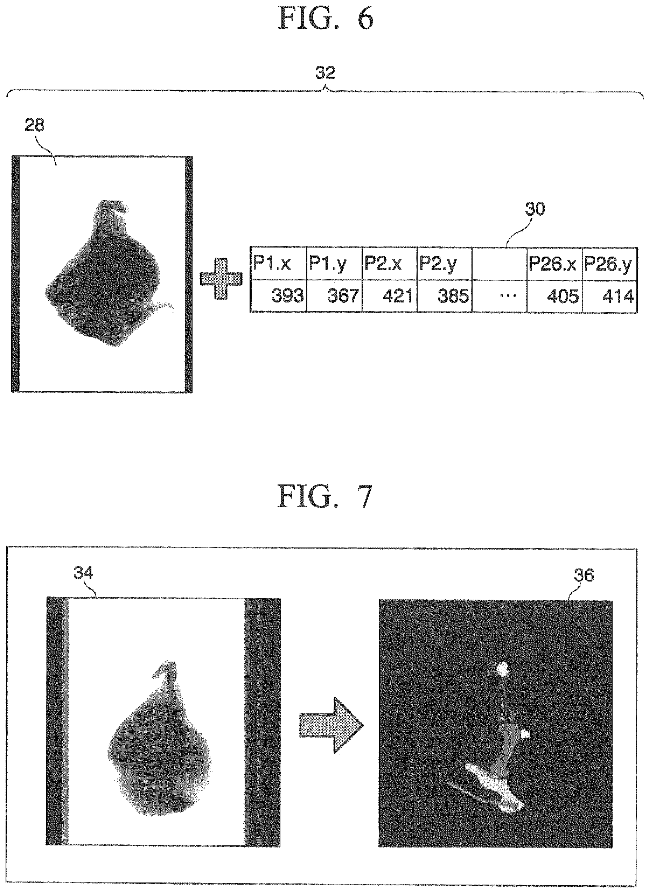

Deep learning of the first algorithm calculation unit 12 can be performed as follows. A plurality of X-ray images 26 photographed by the X-ray image acquisition unit 4 in advance are prepared, and feature points in these X-ray images 26 are plotted based on judgment of an expert as illustrated in Fig. 5. Thus, an X-ray image 28 and a coordinate set 30 of feature points appearing in the image are obtained as illustrated in Fig. 6, and the X-ray image 28 and the coordinate set 30 of the feature points may be deep-learned as training data (teacher data) 32 to construct a first algorithm in the first algorithm calculation unit 12.

The second algorithm calculation unit 14 performs calculation processing according to inference calculation in which feature areas in the subject P have been deep-learned based on the X-ray image data from the X-ray image acquisition unit 4 and thus detects feature areas. In this embodiment, these feature areas correspond to positions of a plurality of bones inside the subject P. In this embodiment, the second algorithm calculation unit 14 is also used in mask image detection (S17) for a 3D image and corresponds to the second image calculation unit in this case.

Fig. 7 schematically illustrates calculation processing of the second algorithm calculation unit 14, in which two-dimensional pixel data of an X-ray image 34 acquired by the X-ray image acquisition unit 4 is input to perform calculation processing according to inference calculation in which feature areas to be obtained have been deep-learned in advance and image data 36 in which the range other than the range of (X, Y) coordinates of each of the feature areas is masked is output.

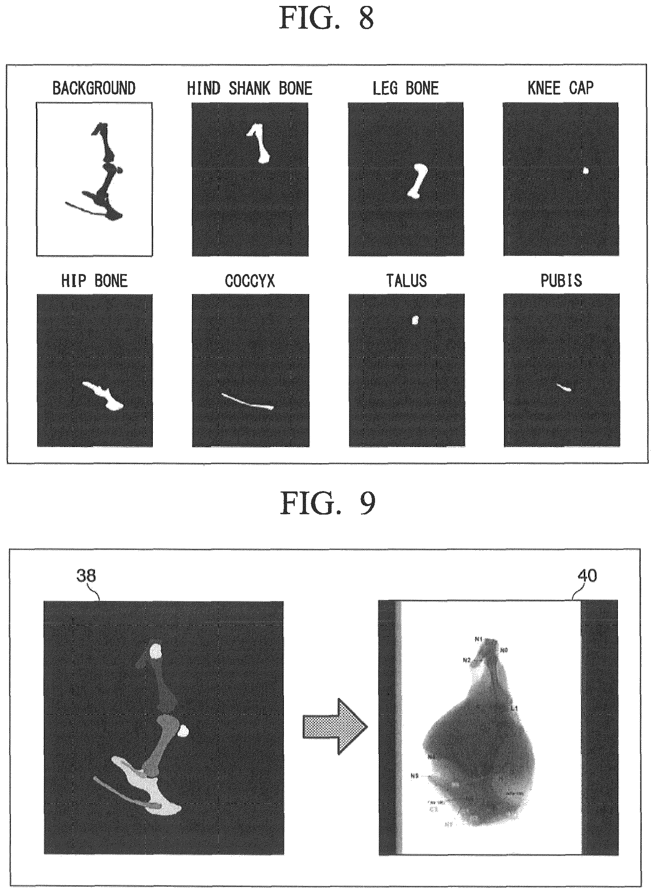

Fig. 8 shows mask images showing examples of a plurality of feature areas (a background, a hind shank bone, a leg bone, a knee cap, a hip bone, a coccyx, a talus, and a pubis) to be obtained by the second algorithm calculation unit 14. Deep learning of the second algorithm calculation unit 14 can be performed as follows. A plurality of X-ray images photographed by the X-ray image acquisition unit 4 in advance are prepared, and feature ranges corresponding to each of the bones shown in Fig. 8 are drawn in these X-ray images based on judgment of an expert. Thus, an X-ray image and a coordinate range set of feature areas appearing in the image are obtained, and thus data sets of these may be deep-learned as training data to construct a second algorithm in the second algorithm calculation unit 14. In a case in which the second algorithm calculation unit 14 is used in mask image detection (S17) on 3D images, the 3D images may also be deep-learned.

The third algorithm calculation unit 16 performs calculation processing according to inference calculation in which feature points to be detected in the subject P have been deep-learned based on data of the feature areas obtained by the second algorithm calculation unit 14 and thus detects feature points of a second group. Although feature points to be detected by the third algorithm calculation unit 16 are the same as those to be detected by the first algorithm calculation unit 12, they differ in that the first algorithm calculation unit 12 obtains the feature points directly from an X-ray image, while the third algorithm calculation unit 16 detects the feature points indirectly based on the feature areas obtained by the second algorithm calculation unit 14. In this embodiment, the third algorithm calculation unit 16 is also used in feature point detection (S18) to detect feature points from the feature areas obtained from the 3D image and corresponds to the second image calculation unit in this case. Furthermore, the third algorithm calculation unit 16 may detect feature points of the second group in the subject P using an image processing technique based on data of the feature areas obtained by the second algorithm calculation unit 14.

Fig. 9 schematically illustrates calculation processing of the third algorithm calculation unit 16, in which two-dimensional pixel data of mask images 38 for a feature area acquired by the second algorithm calculation unit 14 is input to perform calculation processing according to inference calculation in which feature points have been deep-learned in advance and normalized (X, Y) coordinates 40 of each of feature points A, B, C, ..., C6, C7, and C8 are output.

Deep learning of the third algorithm calculation unit 16 can be performed as follows. A plurality of mask images 38 for a feature area obtained by the second algorithm calculation unit 14 are prepared and feature points in these mask images 38 are plotted based on judgment of an expert. Thus, the mask images 38 and a coordinate set of the feature points appearing in the images are obtained, and a number of pieces of the data set thereof may be deep-learned to construct a third algorithm in the third algorithm calculation unit 16. In a case in which the third algorithm calculation unit 16 is used in feature point detection (S18) on 3D images, the 3D images may also be deep-learned.

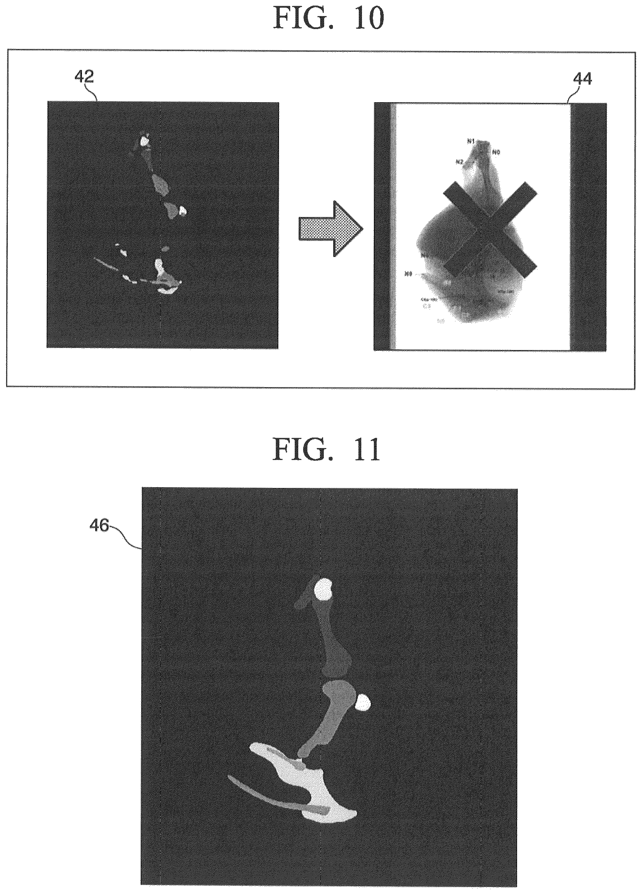

Fig. 10 illustrates a mask image 42 in which detection of a feature area by the second algorithm calculation unit 14 is abnormal and an X-ray image 44 in which detection of feature points is abnormal because the third algorithm calculation unit 16 has detected the feature points from the mask image 42.

The fourth algorithm calculation unit 18 performs calculation on data of the feature areas obtained by the second algorithm calculation unit 14 according to inference calculation in which normal feature areas have been deep-learned and determines the normality of the feature areas obtained by the second algorithm calculation unit 14. Accordingly, for example, the abnormal mask image 42 illustrated in Fig. 10 is calculated according to inference calculation in which normal feature areas have been deep-learned to make a determination of abnormality. Furthermore, the fourth algorithm calculation unit 18 may compare a possible range of feature areas obtained in advance using a statistical technique with the data of the feature areas obtained by the second algorithm calculation unit 14 and determine the normality of the feature areas obtained by the second algorithm calculation unit 14.

Deep learning of the fourth algorithm calculation unit 18 can be performed as follows. A plurality of mask images for a feature area obtained by the second algorithm calculation unit 14 may be prepared, the normal mask image 38 (Fig. 9) and the abnormal mask image 42 may be determined based on judgment of an expert, the mask images and the evaluation of normality and abnormality may be made as data sets, and a number of these data sets may be deep-learned to construct a fourth algorithm in the fourth algorithm calculation unit 18.

The calculation unit 20 outputs final feature points of the subject P using at least one of the data of feature points of the first group detected by the first algorithm calculation unit 12 and the data of feature points of a second group detected by the third algorithm calculation unit 16. The operation of the calculation unit 20 will be described in detail with reference to a following flowchart below.

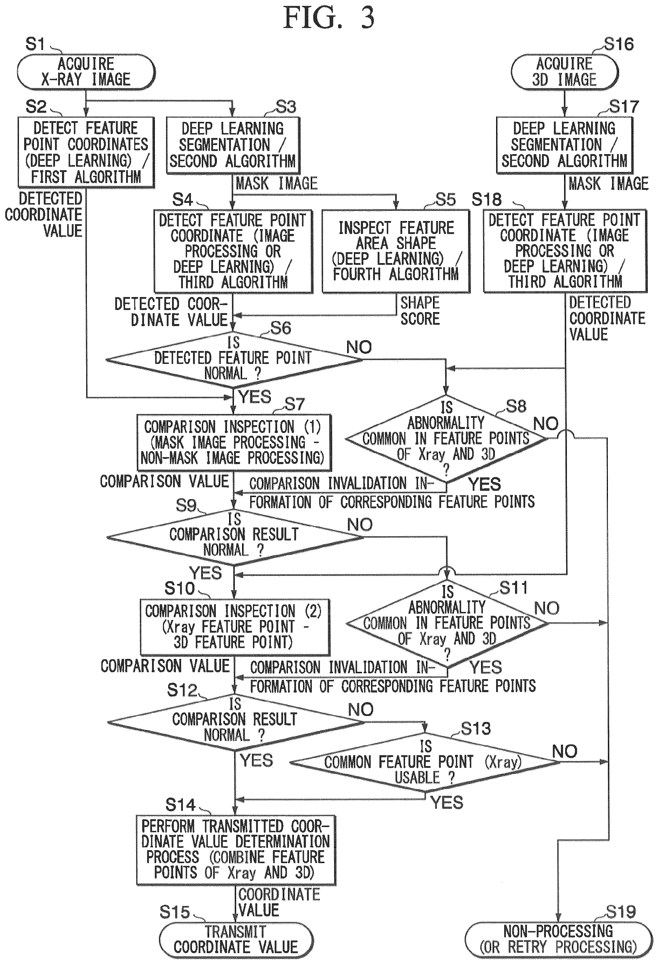

Fig. 3 is a flowchart showing an operation of the feature point recognition system 1 according to the present embodiment to describe the operation of the feature point recognition system 1 in order of steps.

In step S1, the X-ray image acquisition unit 4 acquires an X-ray image (a first image) of the subject P. Thus, the X-ray image 22 of Fig 4, for example, is captured.

In step S2, the first algorithm calculation unit 12 included in the image processing device 8 performs calculation processing on the data of the X-ray image acquired by the X-ray image acquisition unit 4 according to inference calculation in which feature points of the subject P have been deep-learned in advance (the first algorithm), and thereby the first algorithm calculation unit 12 detects feature points of the first group. As a result, for example, normalized (X, Y) coordinates 24 of each of the feature points A, B, C, ..., C6, C7, and C8 shown in Fig. 4 are obtained.

In step S3, the second algorithm calculation unit 14 performs calculation processing on the data of the X-ray image acquired by the X-ray image acquisition unit 4 according to inference calculation in which feature areas of the subject P have been deep-learned (the second algorithm), and thereby the second algorithm calculation unit 14 detects feature areas. In the detection of the feature areas, mask processing to extract only a bone area in the subject P is performed through deep learning that has been performed in advance. As a result, the mask image 36 of Fig. 7, for example, is obtained.

In step S4, the data of the feature areas detected by the second algorithm calculation unit 14 is transferred to the third algorithm calculation unit 16, and the third algorithm calculation unit 16 detects feature points of the second group using the data of the feature areas according to the third algorithm. As a result, feature points 40 of the second group shown in Fig. 9, for example, are obtained.

In step S5, the data of the feature areas detected by the second algorithm calculation unit 14 is also transferred to the fourth algorithm calculation unit 18, and the fourth algorithm calculation unit 18 calculates the data of the feature areas obtained by the second algorithm calculation unit 14 according to inference calculation in which normal feature areas have been deep-learned, determines the normality of the feature areas, and outputs the result as a shape score. As a result, for example, the fourth algorithm calculation unit 18 outputs a low shape score with respect to the abnormal mask image 42 shown in Fig. 10, and the image is determined to be abnormal.

In step S6, the calculation unit 20 receives the data of the feature points of the second group from the third algorithm calculation unit 16 and the shape score from the fourth algorithm calculation unit 18 and determines whether the data of the feature points of the second group detected by the third algorithm calculation unit 16 is normal by collating the data and the score. If the data is determined to be normal, the process proceeds to step S7, and if the data is determined to be abnormal, the process proceeds to step S8.

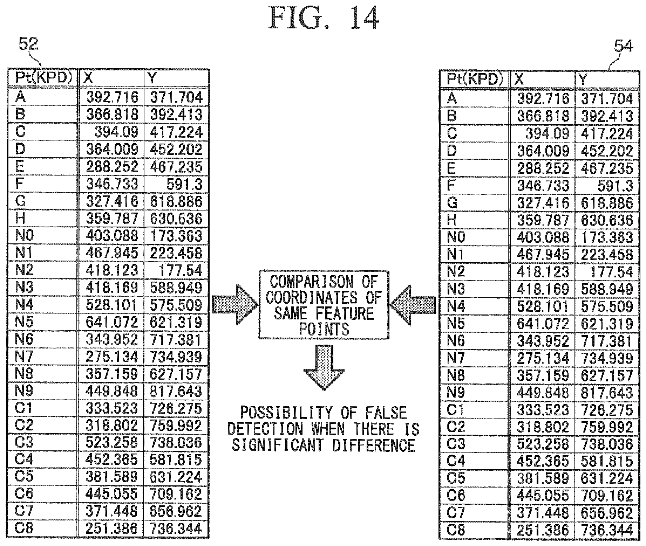

In step S7, the calculation unit 20 compares coordinate data of feature points of the first group from the first algorithm calculation unit 12 obtained in step S2 with coordinate data of the feature points of the second group from the third algorithm calculation unit 16 determined to be normal in step S6. The data of the feature points of the first group is coordinate data of the feature points with no mask processing, the feature points being detected directly without performing mask processing. For example, Fig. 14 is a schematic diagram illustrating a high possibility of false detection in a case where coordinate data 52 of the feature points of the first group from the first algorithm calculation unit 12 is compared with coordinate data 54 of the feature points of the second group from the third algorithm calculation unit 16 for the same feature points and there is a big difference.

In step S7, for example, a difference between the coordinate data of each feature point of the second group from the third algorithm calculation unit 16 obtained through the mask processing and the coordinate data of each feature point of the first group from the first algorithm calculation unit 12 obtained with no mask processing is taken, and if the difference is of a feature point exceeding a predetermined certain threshold, the coordinates of the feature points are determined to be abnormal.

In step S8, the coordinate data of each feature point of the second group is compared with the coordinate data of each feature point of the third group obtained from the 3D image (a second image) in step S18, which will be described below. If the difference between the data of the feature point of the second group obtained from the X-ray image and the data of the feature point of the third group obtained from the 3D image is a predetermined threshold or less as a result of the comparison, the abnormality of the feature point is determined to be common in the X-ray image and the 3D image, and thus a command to ignore the comparison information of the feature points is issued. On the other hand, if the difference is greater than the threshold, an abnormal flag is set, and the process proceeds to step S19.

In step S9, if the feature points are determined to be normal through the comparison in step S7, the process proceeds to step S10, and if the feature points are determined to be abnormal from the comparison of the data of the feature points of the first group and the second group or comparison invalidation information is output in step S8, the feature points are determined to be abnormal and the process proceeds to step S11.

In step S10, the data of the feature points of the second group determined to be normal is compared with the data of the feature points of the third group obtained from the 3D image in step S18, which will be described below. If the difference between the data of the feature points of the second group obtained from the X-ray image and the data of the feature points of the third group obtained from the 3D image is a certain threshold or less, the feature points is determined to be normal, and if the difference is greater than the threshold, the feature points are determined to be abnormal.

In step S11, if the feature points detected in step S9 are determined not to be normal, the coordinate data of the feature points included in the second group is compared with the coordinate data of the feature points included in the third group obtained from the 3D image in step S18, which will be described below. If the difference between the coordinate data of the feature points of the second group obtained from the X-ray image and the coordinate data of the feature points of the third group obtained from the 3D image is a predetermined threshold or less as a result of the comparison, the abnormality of the feature points is determined to be common in the X-ray image and the 3D image, thus a command to ignore the comparison information of the feature points occurs, and if the difference is greater than the threshold, an abnormality flag is set, and the process proceeds to step S19.

In step S12, if the feature points are determined to be normal through the comparison in step S10, the process proceeds to step S14, and if the feature points are determined to be abnormal from the comparison of the data of the feature points of the first group and the second group or comparison invalidation information is output in step S11, the feature points are determined to be abnormal and the process proceeds to step S13.

Whether the difference between the coordinate data of the feature points of the second group obtained from the X-ray image and the coordinate data of the feature points of the third group obtained from the 3D image is small is determined in step S13, and if the difference is smaller than a given threshold, data of the feature points common for the two groups is determined to be usable. If the data is determined to be usable, the process proceeds to step S14, and if the data of the feature points common for the two groups is determined to be unusable, the process proceeds to step S19.

In step S14, the data of the feature points of the second group obtained from the X-ray image is combined with the data of the feature points of the third group obtained from the 3D image, and coordinates to be transmitted are finally determined. As an example of the combination method, the coordinates of an intermediate point of the two groups may be calculated and the coordinates of the intermediate point may be set as the final coordinates of the data of the feature points. As another example, the average of the total of three coordinates of the data of the feature points of the first and second groups obtained from the X-ray image and the data of the feature points of the third group obtained from the 3D image may be set as the final data of the feature points in step S13. By averaging the feature point data groups of the normal second or third group and obtaining the final coordinates as described above, accuracy in the finally obtained coordinates of the feature points can be further improved.

In step S15, the data of the feature points combined in step S14 is output from the image processing device 8, and thereby one cycle of the flowchart is completed.

On the other hand, in step S16, the 3D image acquisition unit 6 photographs the subject P and the 3D image acquisition unit 6 obtains data of the 3D image (a second image). Step S16 may be performed at the same time as step S1 and may be performed at a timing different from step S1.

In step S17, the second algorithm calculation unit 14 (a part of the second image calculation unit) performs calculation processing on the data of the 3D image acquired by the 3D image acquisition unit 6 according to inference calculation in which feature areas of the subject P have been deep-learned (the second algorithm), and thereby the second algorithm calculation unit 14 detects feature areas. In the detection of the feature areas, mask processing of extracting only areas of bones in the subject P is performed through the pre-performed deep learning. A method of the deep learning may be similar to the deep learning of feature points of the X-ray image described above.

In step S18, the data of the feature areas detected by the second algorithm calculation unit 14 is transferred to the third algorithm calculation unit 16 (a part of the second image calculation unit), and the third algorithm calculation unit 16 detects feature points of the third group using the data of the feature areas according to the third algorithm. The data of the detected feature points of the third group is sent to step S8 and step S10.

If an abnormality flag is set in steps S8, S11, and S14, the process of step S19 returns to step S1 to repeat the process from step S1 based on the captured X-ray image and 3D image. In addition, the number of retries T of which the initial value is equal to 0 (T = 0) is set to 1 (T = 1). In a case where steps S1 to S19 are repeated, the number of retries T increments by one, and if T is equal to n (T = n, where n is a predetermined positive integer equal to or greater than 2), T is initialized to 0 (T = 0), the current feature point recognition work for the subject P is stopped, an alarm goes off to the worker, the work is switched to manual work on the assumption that the recognition of feature points of the subject P has failed, or the subject P is ejected from the feature point recognition system 1. The worker determines whether the subject P is to be removed from the feature point recognition system 1 or to be switched to manual post-processing.

According to the feature point recognition system 1 described above, the data of the feature points of the first group obtained by the first algorithm calculation unit 12 with no mask processing is compared with the data of the feature points of the second group detected by the third algorithm calculation unit 16 obtained through mask processing by the second algorithm calculation unit 14 in the operation performed based on the above-described flowchart, the data is determined to be abnormal if there is a difference equal to or greater than a given threshold, and thus the feature points of the subject P can be recognized more accurately and stably than in the related art.

Thus, even in a case where the mask image 46 obtained by the second algorithm calculation unit 14 is seen to be normal at a glance as shown in Fig. 11, for example, the coordinate data of each of feature points (Fig. 12) of the second group obtained based on the mask image 46 is compared with the coordinate data of each of feature points obtained from the first algorithm calculation unit 12 to enable feature points indicating abnormality, like the feature points F, G, and H shown in Fig. 12, to be detected, and if normal data is not able to be obtained even after repeating step S 1 again to obtain correct data or repeating the process a predetermined number of times, a measure such as stopping processing of the subject P can be taken.

Furthermore, in this embodiment, the 3D image shown in Fig. 13 is acquired by the 3D image acquisition unit 6 as a second image and is compared with the coordinate data of the feature points included in the third group obtained from the 3D image, and as a result, higher accuracy can be achieved. The 3D image may be set as a first image and the X-ray image may be set as a second image, and the above-described other image may replace the images for use.

Further, a step related to the 3D image in the embodiment can be omitted.

In addition, for data of statistical feature points obtained in advance using a statistical method, a range from a minimum value to a maximum value in distance between feature points may be statistically obtained simply for many samples to determine whether the statistical data of the feature points, the coordinate data of each feature point of the second group obtained from the third algorithm calculation unit 16, and/or the coordinate data of each feature point obtained from the first algorithm calculation unit 12 is normal or abnormal.

### INDUSTRIAL APPLICABILITY

According to the feature point recognition system and the recognition method of the present invention, when feature points of the first group and the second group obtained using two methods are used, position information of the feature points can be obtained from an image of a subject stably and with higher accuracy.

### REFERENCE SIGNS LIST

- 1: Feature point recognition system
- 2: Conveyor
- 4: X-ray image acquisition unit (a first image acquisition unit)
- 6: 3D image acquisition unit (a second image acquisition unit)
- 8: Image processing device
- 10: Shield
- 12: First algorithm calculation unit
- 14: Second algorithm calculation unit
- 16: Third algorithm calculation unit
- 18: Fourth algorithm calculation unit
- 20: Calculation unit
- 22: X-ray image (an example of a first image)
- 24: Data of feature points of first group
- 32: Training data
- 36: Mask image
- 50: 3D image (an example of a second image)

## Claims

1. A feature point recognition system that recognizes a feature point of a subject in an image acquired from the subject, the feature point recognition system comprising:
an image acquisition unit configured to acquire an image of the subject;
a first algorithm calculation unit configured to perform calculation processing on the image acquired by the image acquisition unit according to inference calculation in which feature points of the subject have been deep-learned and to detect a feature point of a first group;
a second algorithm calculation unit configured to perform calculation processing on the image acquired by the image acquisition unit according to inference calculation in which feature areas of the subject have been deep-learned and to detect a feature area;
a third algorithm calculation unit configured to detect a feature point of a second group using the feature area obtained by the second algorithm calculation unit; and
a calculation unit configured to output a feature point of the subject using at least one of data of the feature point of the first group detected by the first algorithm calculation unit and data of the feature point of the second group detected by the third algorithm calculation unit.

2. The feature point recognition system according to claim 1, further comprising:
a second image acquisition unit configured to acquire a second image of the subject; and
a second image calculation unit configured to detect a feature point of a third group from the second image acquired by the second image acquisition unit,
wherein the calculation unit investigates normality or abnormality of a detection result of the feature points of the subject using at least two among the data of the feature point of the first group detected by the first algorithm calculation unit, the data of the feature point of the second group detected by the third algorithm calculation unit, and the data of the feature point of the third group detected by the second image calculation unit.

3. The feature point recognition system according to claim 1 or 2, comprising a fourth algorithm calculation unit configured to calculate the data of the feature area obtained by the second algorithm calculation unit according to inference calculation in which normal feature areas have been deep-learned and to determine normality of the feature area obtained by the second algorithm calculation unit.

4. The feature point recognition system according to claim 2, wherein the calculation unit compares at least two among the data of the feature point of the first group detected by the first algorithm calculation unit, the data of the feature point of the second group detected by the third algorithm calculation unit, and the data of the feature point of the third group detected by the second image calculation unit with each other, selects a feature point of the two feature points used for the comparison that is determined to have higher accuracy as a feature point of the subject, and outputs the feature point.

5. A feature point recognition method for recognizing a feature point of a subject in an image acquired from the subject, the feature point recognition method comprising:
an image acquisition step of acquiring an image of the subject;
a first algorithm calculation step of performing calculation processing on the image acquired in the image acquisition step according to inference calculation in which feature points of the subject have been deep-learned and detecting a feature point of a first group;
a second algorithm calculation step of performing calculation processing on the image acquired in the image acquisition step according to inference calculation in which feature areas of the subject have been deep-learned and detecting a feature area;
a third algorithm calculation step of detecting a feature point of a second group using the feature area obtained in the second algorithm calculation step; and
a calculation step of outputting a feature point of the subject using at least one of data of the feature point of the first group detected in the first algorithm calculation step and data of the feature point of the second group detected in the third algorithm calculation step.
